# EUROPEAN PATENT SPECIFICATION

(11) **EP 1 880 514 B1**
(45) Date of publication and mention of the grant of the patent: **18.12.2013**
(21) Application number: 06722919.5
(22) Date of filing: 28.04.2006
(51) Int. Cl.: H04L 12/46

(54) **NETWORK BANDWIDTH DISTRIBUTOR WHICH ADJUSTS BANDWIDTH LIMITERS BASED ON MEASURED OR ESTIMATED PASSING BANDWIDTH**
NETZWERKBANDBREITENVERTEILER, DER BANDBREITENBEGRENZER AUF DER BASIS GEMESSENER ODER GESCHÄTZTER DURCHLASSBANDBREITE JUSTIERT
DISTRIBUTEUR DE LARGEUR DE BANDE RESEAU AJUSTANT DES LIMITEURS DE LARGEUR DE BANDE EN FONCTION D'UNE LARGEUR DE BANDE PASSANTE MESUREE OU ESTIMEE

(30) Priority: 30.04.2005 DK 200500636
(43) Date of publication of application: 23.01.2008
(73) Proprietor: Smartshare Systems A/S, 2740 Skovlunde (DK)
(72) Inventor: BRØRUP, Morten, DK-2730 Herlev (DK); ROSTOCK LAURSEN, Per, DK-2730 Herlev (DK); LOHSE, Allan, DK-2740 Skovlunde (DK); LOHSE, Martin, DK-2300 Copenhagen S (DK); THERKELSEN, Troels, DK-2700 Brønshøj (DK)
(74) Representative: Inspicos A/S
(86) International application number: PCT/DK2006/000227
(87) International publication number: WO 2006/117000

(56) References cited:
- US-A1- 2003 163 593
- US-A1- 2004 203 825
- US-B1- 6 424 624
- US-B1- 6 687 224

## Description

This invention relates to a bandwidth distributor which dynamically adjusts bandwidth limiters based on available bandwidth. This is particularly efficient in a network with limited bandwidth.

The general state of the art bandwidth distributors provide either bandwidth limiters with fixed settings or settings that are dynamically adjusted based on the bandwidth historically used by each output port.

Other technologies may be seen in US6424624 and US 6687224.

An object of the present invention is to implement a bandwidth distributor which adjusts the bandwidth limiters based on the relationship between available and used input bandwidth.

A particular advantage of the present invention is a significantly improved bandwidth distribution where the output ports are not excessively bandwidth limited when input bandwidth is available.

A particular feature of the present invention is the provision of a bandwidth controller, which adjusts the bandwidth limiters based on comparing the measured or estimated passing bandwidth to a predetermined bandwidth.

The invention relates to a bandwidth distributing unit according to claim 1 and a method according to claim 6. A unit of this type may comprise:
- one or more physical input ports
- a logical input port
- an optional input traffic translator
- a traffic distributor
- multiple logical output ports
- once or more physical output ports
- an output traffic translator on each or some or none of the logical output ports
- a bandwidth limiter on each or some of the logical output ports
- a bandwidth controller
in addition to either:
- a bandwidth measurer on the logical input port
   or
- either a bandwidth measurer or a bandwidth limiter (or both) on each of the logical output ports (individually per output port)
wherein:
- the logical input port receives all the input traffic from one or more of the physical input ports; the input traffic comprising of packets, optionally with attached information, such as the physical port where the packet arrived.
- the optional input traffic translator translates each packet in the input traffic according to its configured translation rules. The translation rules of the optional input traffic translator is controlled by outside parameters. A translation rule could be such as to not change anything in the packet, such as to change the destination IP address and TCP port in the packet depending on the original destination IP address and TCP port in the packet, such as to add a VLAN tag depending on the physical input port where the packet arrived.
- the traffic distributor distributes the traffic arriving on the logical input port (after it has been translated by the optional input traffic translator, if present) among the logical output ports according to its configured distribution rules. The distribution rules of the traffic distributor is controlled by outside parameters. A distribution rule could be such as to determine the logical output port of each packet in the traffic depending on the contents of the packet, such as the destination IP address, such as the destination MAC address. A distribution rule could be such as to determine the logical output port of each packet in the traffic depending on information attached to the packet by the optional traffic input translator.
- each output traffic translator translates each packet in the logical port's output traffic according to its configured translation rules. The translation rules of each output traffic translator is controlled by outside parameters. A translation rule could be such as to not change anything in the packet, such as to change the destination IP address and TCP port in the packet depending on the contents of the packet. A translation rule could be such as to add a VLAN tag to the packet depending on information attached to the packet by the traffic distributor.
- each logical output port transmits its traffic on a physical output port, which may transmit traffic from one or more logical ports.
- a physical port may be an antenna, an RJ45 connector, a fibre connector or any other kind of connection to any kind of transport medium.
- the physical input ports and the physical output ports need not be separate physical ports.
- the bandwidth controller uses the passing bandwidth to determine the settings of the bandwidth limiters of the logical output ports. The bandwidth controller periodically compares the passing bandwidth to a predetermined value. When the passing bandwidth is below the predetermined value, the bandwidth controller increases the setting on all or some of the limiters. When the passing bandwidth is above the predetermined value, the unit decreases the setting on all or some of the limiters. The predetermined value is typically set to the maximum available bandwidth provided on the logical input port minus a small value, such as 0.01%, such as 0.1%, such as 1%, such as 5%, such as 10%, such as 20%, such as 45%. The bandwidth limiters are typically traffic shapers, such as tail-drop shapers, such as RED shapers.

And the passing bandwidth being e.g. either:
- the bandwidth measured on the logical input port.
   or:
- an estimate, which is calculated as the sum of the bandwidth measured on each of the logical output ports with.a bandwidth measurer plus the sum of the setting of the bandwidth limiter on each of the logical output ports without a bandwidth measurer.

Preferably, the predetermined percentage is 99.99% or lower, such as 99.9% or lower, such as 99% or lower, such as 95% or lower, such as 90% or lower, such as 80% or lower, such as 55% or lower.

The invention is particularly preferred when the total output bandwidth is significantly higher than the total input bandwidth, such as 2 times higher, such as 10 times higher, such as 1000 times higher.

In the following, a preferred embodiment of the intention will be described with reference to the drawing.

### Brief description of the drawings

Figure 1 shows a block diagram of the network bandwidth distributor where output bandwidth limiters are adjusted based on the measured input bandwidth.
Figure 2 shows a block diagram of the network bandwidth distributor where output bandwidth limiters are adjusted based on the estimated passing bandwidth.
Figure 3 shows a simplified block diagram of the network bandwidth distributor.

### Detailed description of the present invention

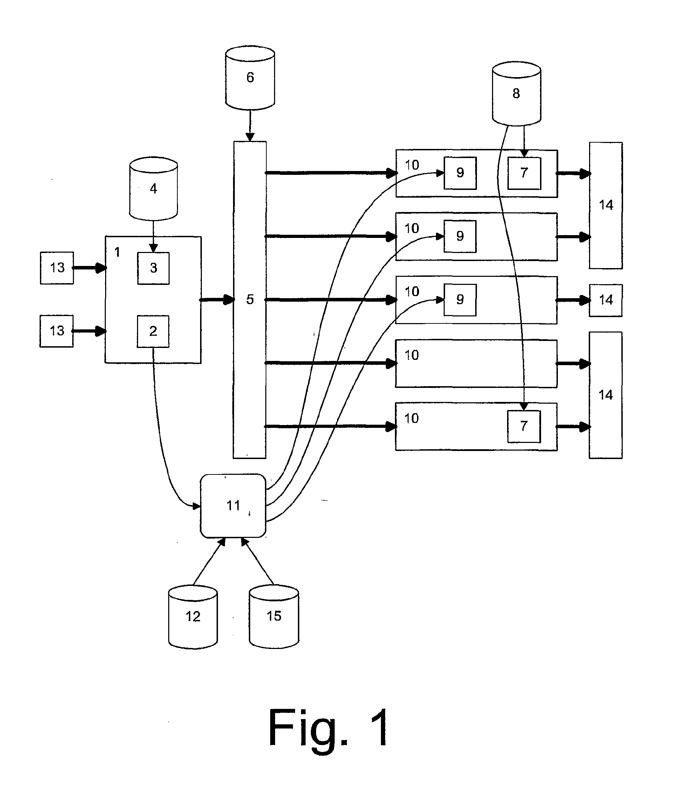

Figure 1 shows a block diagram of an example embodiment of the network bandwidth distributor where the measured input bandwidth is used as basis for adjusting the output bandwidth limiters.

Traffic arriving at the physical input ports 13 flows into the logical input port 1, which contains a bandwidth measurer 2 and an input traffic translator 3. Any number of physical input ports may be present; in this example, two are present.

The bandwidth measurer 2 measures the traffic passing the logical input port 1.

The input traffic translator 3 modifies the traffic passing through the logical input port 1 according to the input traffic translation parameters 4.

After passing the logical input port 1, the traffic flows through the traffic distributor 5, which distributes the traffic to the logical output ports 10 according to the traffic distribution rules 6. Any number of logical output ports may be present; in this example, five are present.

Some of the logical output ports 10 contain a bandwidth limiter 9, which limits the outgoing traffic bandwidth as instructed by the bandwidth controller 11. Any number of the logical output ports may contain a bandwidth limiter; in this example, three of them do.

Some of the logical output ports 10 contain an output traffic translator 7, which modifies the traffic passing through the logical output port 10 according to the output traffic translation parameters 8. Any number of the logical output ports may contain an output traffic translator; in this example, two of them do.

Traffic flowing out of the logical output ports 10 leave at the physical output ports 14. Any number of physical output ports may be present, and any number of the logical output ports may be connected to each of the physical output ports; in this example, three physical output ports exist, where two of them each have two logical output ports connected it and the third has one logical output port connected to it.

The bandwidth controller 11 periodically compares the bandwidth measured at the logical input port 1 by the bandwidth measurer 2 to the predetermined bandwidth 12.

When the bandwidth measured by the bandwidth measurer 2 is above the predetermined bandwidth 12, the bandwidth controller 11 may decrease the bandwidth of some or all of the bandwidth limiters 9.

When the bandwidth measured by the bandwidth measurer 2 is below the predetermined bandwidth 12, the bandwidth controller 11 may increase the bandwidth of some or all of the bandwidth limiters 9.

The bandwidth controller 11 has a list of maximum bandwidth settings 15, which determines the maximum bandwidth the bandwidth controller 11, sets in each listed bandwidth limiter 9.

The input traffic translator 3 with its input traffic translation parameters 4 is optional.

The output traffic translator 7 with its output traffic translation parameters 8 is optional for each logical output port 10.

The bandwidth limiter 9 is optional for each logical output port 10.

The list of maximum bandwidth settings 15 is optional.

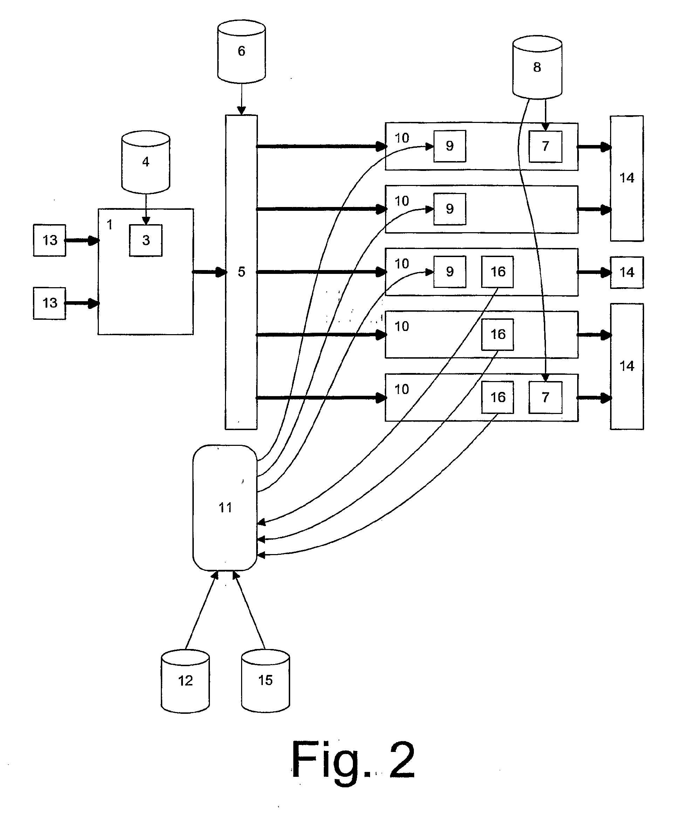

Figure 2 shows a block diagram of an example embodiment of the network bandwidth distributor where some measured output bandwidths are used as basis for estimating the passing bandwidth and adjusting the output bandwidth limiters.

Traffic arriving at the physical input ports 13 flows into the logical input port 1, which contains an input traffic translator 3. Any number of physical input ports may be present; in this example, two are present.

The input traffic translator 3 modifies the traffic passing through the logical input port 1 according to the input traffic translation parameters 4.

After passing the logical input port 1, the traffic flows through the traffic distributor 5, which distributes the traffic to the logical output ports 10 according to the traffic distribution rules 6. Any number of logical output ports may be present; in this example, five are present. ,

Some of the logical output ports 10 contain a bandwidth limiter 9, which limits the outgoing traffic bandwidth as instructed by the bandwidth controller 11. Any number of the logical output ports may contain a bandwidth limiter; in this example, three of them do.

Some of the logical output ports 10 contain an output traffic translator 7, which modifies the traffic passing through the logical output port 10 according to the output traffic translation parameters 8. Any number of the logical output ports may contain an output traffic translator; in this example, two of them do.

Some of the logical output ports 10 contain a bandwidth measurer 16, which measures the traffic bandwidth as it passes the logical output port 10. Any number of the logical output ports may contain a bandwidth measurer; in this example, three of them do.

Traffic flowing out of the logical output ports 10 leave at the physical output ports 14. Any number of physical output ports may be present, and any number of the logical output ports may be connected to each of the physical output ports; in this example, three physical output ports exist, where two of them each have two logical output ports connected it and the third has one logical output port connected to it.

The bandwidth controller 11 periodically calculates the sum of the bandwidth measured by the bandwidth measurers 16 and compares the summed bandwidth to the predetermined bandwidth 12.

When the summed bandwidth is above the predetermined bandwidth 12, the bandwidth controller 11 may decrease the bandwidth of some or all of the bandwidth limiters 9.

When the summed bandwidth is below the predetermined bandwidth 12, the bandwidth controller 11 may increase the bandwidth of some or all of the bandwidth limiters 9.

The bandwidth controller 11 has a list of maximum bandwidth settings 15, which determines the maximum bandwidth the bandwidth controller 11 sets in each listed bandwidth limiter 9.

The input traffic translator 3 with its input traffic translation parameters 4 is optional.

The output traffic translator 7 with its output traffic translation parameters 8 is optional for each logical output port 10.

The bandwidth limiter 9 is optional for each logical output port 10.

The bandwidth measurer 16 is optional for each logical output port 10.

The list of maximum bandwidth settings 15 is optional.

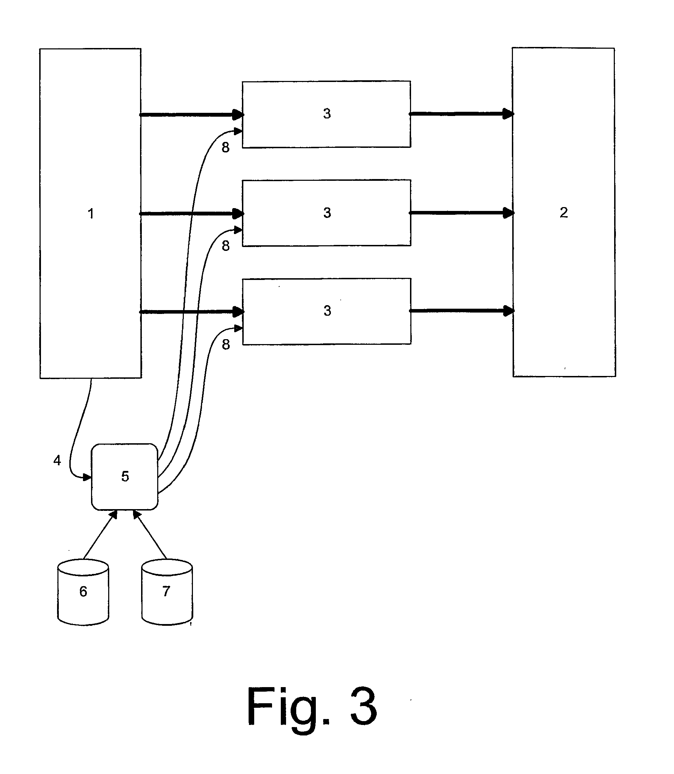

Figure 3 shows a simplified block diagram of the network bandwidth distributor in an example embodiment with one port for receiving data from external entities, one port for sending data to local users and three buffers for forwarding data from the first port to the second port for a user.

Data is received from external entities by the first port 1 and temporarily stored per type of data in the buffer 3 corresponding to each type of data, until the buffer 3 forwards its stored data to the second port 2, which sends the data to the local users. The bandwidth controller 5 compares the determined bandwidth 4 with which the first port 1 receives data to a predetermined percentage 6 of the total maximum bandwidth 7.

If the bandwidth 4 exceeds the predetermined percentage 6 of the total maximum bandwidth 7, the bandwidth 8 with which the buffers 3 can forward data to the local users is reduced.

## Claims

1. An apparatus for distributing bandwidth, comprising:
• one or more first port(s) for receiving data from external entities, the first port(s) having a total reception bandwidth maximum,
• one or more second port(s) for sending data received by the first port(s) to local users,
the apparatus being **characterized by**:
• means for determining a bandwidth with which the first port(s) receive data from the external entities and for comparing the bandwidth to the total reception bandwidth maximum of the first port(s), and
• means for, if the bandwidth exceeds a predetermined percentage, being lower than 100%, of the total reception bandwidth maximum of the first port(s), reducing a bandwidth with which at least one predetermined type of data is sent from the first port(s) to the second port(s).

2. An apparatus according to claim 1, wherein:
• the one or more first port(s) are also adapted to send data to the external entities, and
• the one or more second port(s) are also adapted to receive data from the local users to be sent by the first port(s).

3. An apparatus according to claims 1 or 2, wherein the reducing means are adapted to determine, for one or more of the predetermined type(s) of data, a minimum bandwidth with which the reducing means are adapted to send the predetermined type(s) of data between the first port(s) and the second port(s), and to not reduce the bandwidth with which the reducing means sends the predetermined type(s) of data between the first port(s) and the second port(s), if that bandwidth is lower than the minimum bandwidth for the predetermined type(s) of data.

4. An apparatus according to any of the preceding claims, wherein the determining means are adapted to perform the determination and the comparison with regular time intervals.

5. An apparatus according to any of the preceding claims, wherein the predetermined percentage is 99.99% or lower.

6. An apparatus according to claim 1, wherein the second port(s) have a total output bandwidth maximum, the total output bandwidth being significantly higher than the total reception bandwidth.

7. A method of distributing bandwidth, the method comprising:
1. one or more first port(s) receiving data from external entities, the first port(s) having a total reception bandwidth maximum,
2. one or more second ports sending data received by the first port(s) to local users, the method being **characterized by**:
3. determining a bandwidth with which the first port(s) receive data from the external entities and comparing the bandwidth to the total reception bandwidth maximum of the first port(s), and
4. if the bandwidth exceeds a predetermined percentage, being lower than 100%, of the total reception bandwidth maximum of the first port(s), reducing a bandwidth with which at least one predetermined type of data is sent from the first port(s) to the second port(s).

8. A method according to claim 7, wherein :
• step 1 also comprises the one or more first port(s) sending data to the external entities, and
• step 2 also comprises the one or more second port(s) receiving data from the local users to be sent by the first port(s).

9. A method according to claims 7 or 8, wherein the reducing step comprises of determining, for one or more of the predetermined type(s) of data, a minimum bandwidth with which the reducing means are adapted to send the predetermined type(s) of data between the first port(s) and the second port(s), and not reducing the bandwidth with which the reducing means sends the predetermined type(s) of data between the first port(s) and the second port(s), if that bandwidth is lower than the minimum bandwidth for the predetermined type(s) of data.

10. A method according to any of claims 7-9, wherein the determining step comprises of performing the determination and the comparison with regular time intervals.

11. A method according to any of claims 7-10, wherein the predetermined percentage is 99.99% or lower.

12. A method according to claim 7, wherein the second port(s) have a total output bandwidth maximum, the total output bandwidth being significantly higher than the total reception bandwidth.

## Patentansprüche

1. Vorrichtung zur Bandbreitenverteilung mit
• einem oder mehreren ersten Port/s zum Empfangen von Daten von externen Einheiten, wobei der/die Port/s ein Gesamtempfangsbandbreitenmaximum aufweisen,
• einem oder mehreren zweiten Port/s zum Senden von von dem/den ersten Port/s empfangenen Daten zu lokalen Nutzern,
wobei die Vorrichtung **gekennzeichnet ist durch**
• Mittel zum Bestimmen einer Bandbreite, mit denen der/die erste/n Port/s Daten von den externen Einheiten empfangen und zum Vergleichen der Bandbreite mit dem Gesamtempfangsbandbreitenmaximum des/der ersten Port/s, und
• Mittel zum Herabsetzen einer Bandbreite, mit der wenigstens ein vorbestimmter Datentyp von dem/den ersten Port/s zu dem/den zweiten Port/s gesendet werden, falls die Bandbreite einen vorbestimmten Prozentsatz übersteigt, der kleiner als 100% des Gesamtempfangsbandbreitenmaximums des/der ersten Port/s ist.

2. Vorrichtung nach Anspruch 1, bei der
• der oder mehrere erste Port/s ebenfalls dazu eingerichtet sind, Daten an die externen Einheiten zu senden, und
• der oder mehrere zweite Port/s ebenso dazu eingerichtet sind, Daten von den lokalen Nutzern, die von den/die ersten Port/s zu senden sind, zu empfangen.

3. Vorrichtung nach Anspruch 1 oder 2, bei der die Mittel zum Herabsetzen dazu eingerichtet sind, für einen oder mehrere vorbestimmte/n Datentyp/en eine minimale Bandbreite zu bestimmen, mit der die Mittel zum Herabsetzen dazu eingerichtet sind, den/die vorbestimmten Datentyp/en zwischen dem/den ersten Port/s und dem/den zweiten Port/s zu senden und diejenige Bandbreite nicht zu verringern, mit der das Mittel zum Herabsetzen den/die vorbestimmte/n Datentyp/en zwischen dem/den ersten Port/s und dem/den zweiten Port/s sendet, falls diese Bandbreite kleiner als die minimale Bandbreite für den/die vorbestimmten Datentyp/en ist.

4. Vorrichtung nach einem der vorangehenden Ansprüche, bei der die Bestimmungsmittel dazu eingerichtet sind, das Bestimmen und den Vergleich in regelmäßigen Zeitintervallen durchzuführen.

5. Vorrichtung nach einem der vorangehenden Ansprüche, bei der der vorbestimmte Prozentsatz 99,99% oder weniger ist.

6. Vorrichtung nach Anspruch 1, bei der der/die zweite/n Port/s ein Gesamtausgabebandbreitemaximum hat/haben, wobei die Gesamtausgabebandbreite merklich höher als die Gesamtempfangsbandbreite ist.

7. Verfahren zur Bandbreitenverteilung, wobei das Verfahren aufweist:
1. einen oder mehrere erste/n Port/s, der/die Daten von externen Einheiten empfängt/empfangen, wobei der/die erste/n Port/s ein Gesamtempfangsbandbreitenmaximum aufweist/aufweisen,
2. einen oder mehrere zweite Ports, der/die von dem/den ersten Port/s empfangene Daten an lokale Nutzer sendet/senden, wobei das Verfahren **gekennzeichnet ist durch**
3. Bestimmen einer Bandbreite, mit der der/die erste/n Port/s Daten von den externen Einheiten empfängt/empfangen, und Vergleich der Bandbreite mit dem Gesamtempfangsbandbreitenmaximum des /der ersten Port/s, und
4. Herabsetzen einer Bandbreite, mit der wenigstens ein vorbestimmter Datentyp von dem/den ersten Port/s zu dem/den zweiten Port/s gesendet wird, falls die Bandbreite einen vorbestimmten Prozentsatz übersteigt, der kleiner als 100% des Gesamtempfangsbandbreitenmaximums des/der ersten Port/s ist.

8. Verfahren nach Anspruch 7, bei dem
• der Schritt 1 weiterhin umfasst, dass ein oder mehrere erste/r Port/s Daten an die externen Einheiten sendet/senden, und
• der Schritt 2 weiterhin umfasst, dass der oder mehrere zweite Port/s von dem/den ersten Port/s zu sendende Daten von den lokalen Nutzern empfängt/empfangen.

9. Verfahren nach Anspruch 7 oder 8, bei dem der Schritt des Herabsetzens für einen oder mehrere des/der vorbestimmten Datentyps/en ein Bestimmen einer minimalen Bandbreite aufweist, mit der die Mittel zum Herabsetzen dazu eingerichtet sind, den/die vorbestimmten Datentyp/en zwischen dem/den ersten Port/s und dem/den zweiten Port/s zu senden und diejenige Bandbreite nicht zu verringern, mit der das Mittel zum Herabsetzen den/die vorbestimmte/n Datentyp/en zwischen dem/den ersten Port/s und dem/den zweiten Port/s sendet, falls diese Bandbreite kleiner als die minimale Bandbreite für den/die vorbestimmte/n Datentyp/en ist.

10. Verfahren nach einem der Ansprüche 7 bis 9, bei dem der Schritt zum Bestimmen ein Ausführen des Bestimmens und den Vergleich in regelmäßigen Zeitintervallen umfasst.

11. Verfahren nach einem der Ansprüche 7 bis 10, bei dem der vorbestimmte Prozentsatz 99,99% oder weniger ist.

12. Verfahren nach Anspruch 7, bei dem der/die zweite/n Port/s ein Gesamtausgabebandbreitenmaximum hat /haben, wobei die Gesamtausgabebandbreite merklich höher als die Gesamtempfangsbandbreite ist.

## Revendications

1. Appareil de distribution de la largeur de bande, comprenant :
• un ou plusieurs premier(s) port(s) pour recevoir des données de la part d'entités externes, le/les premier(s) port(s) ayant une largeur de bande de réception totale maximale,
• un ou plusieurs deuxième(s) port(s) pour envoyer des données reçues par le/les premier(s) port(s) à des utilisateurs locaux,
l'appareil étant **caractérisé par** :
• des moyens pour déterminer une largeur de bande avec laquelle le/les premier(s) port(s) reçoi(ven)t des données de la part des entités externes et pour comparer la largeur de bande à la largeur de bande de réception totale maximale du/des premier(s) port(s) et
• des moyens pour, si la largeur de bande dépasse un pourcentage prédéterminé, lequel est inférieur à 100 %, de la largeur de bande de réception totale maximale du/des premier(s) port(s), réduire une largeur de bande avec laquelle au moins un type de données prédéterminé est envoyé depuis le/les premier(s) port(s) vers le/les deuxième(s) port(s).

2. Appareil selon la revendication 1, dans lequel :
• le ou plusieurs premier(s) port(s) sont également adaptés pour envoyer des données aux entités externes et
• le ou plusieurs deuxième(s) port(s) sont également adaptés pour recevoir de la part des utilisateurs locaux des données à envoyer par le/les premier(s) port(s).

3. Appareil selon la revendication 1 ou 2, dans lequel les moyens de réduction sont adaptés pour déterminer, pour un ou plusieurs des types prédéterminés de données, une largeur de bande minimale avec laquelle les moyens de réduction sont adaptés pour envoyer le/les types(s) prédéterminé(s) de données entre le/les premier(s) port(s) et le/les deuxième(s) port(s) et ne pas réduire la largeur de bande avec laquelle les moyens de réduction envoient le/les types(s) prédéterminé(s) de données entre le/les premier(s) port(s) et le/les deuxième(s) port(s) si cette largeur de bande est inférieure à la largeur de bande minimale pour le/les types(s) prédéterminé(s) de données.

4. Appareil selon l'une quelconque des revendications précédentes, dans lequel les moyens de détermination sont adaptés pour effectuer la détermination et la comparaison avec des intervalles de temps réguliers.

5. Appareil selon l'une quelconque des revendications précédentes, dans lequel le pourcentage prédéterminé est de 99,99 % ou moins.

6. Appareil selon la revendication 1, dans lequel le/les deuxième(s) port(s) possède(nt) une largeur de bande de sortie totale maximale, la largeur de bande de sortie totale étant nettement supérieure à la largeur de bande de réception totale.

7. Procédé de distribution d'une largeur de bande, le procédé comprenant :
1. un ou plusieurs premier(s) port(s) recevant des données de la part d'entités externes, le/les premier(s) port(s) ayant une largeur de bande de réception totale maximale,
2.un ou plusieurs deuxième(s) port(s) envoyant des données reçues par le/les premier(s) port(s) à des utilisateurs locaux,
le procédé étant **caractérisé par** :
3. la détermination d'une largeur de bande avec laquelle le/les premier(s) port(s) reçoi(ven)t des données de la part des entités externes et la comparaison de la largeur de bande à la largeur de bande de réception totale maximale du/des premier(s) port(s) et
4.si la largeur de bande dépasse un pourcentage prédéterminé, lequel est inférieur à 100 %, de la largeur de bande de réception totale maximale du/des premier(s) port(s), la réduction d'une largeur de bande avec laquelle au moins un type de données prédéterminé est envoyé depuis le/les premier(s) port(s) vers le/les deuxième(s) port(s).

8. Procédé selon la revendication 7, dans lequel :
• l'étape 1 comprend également l'envoi par le ou les plusieurs premier(s) port(s) de données aux entités externes et
• l'étape 2 comprend également la réception depuis les utilisateurs locaux par le ou plusieurs deuxième(s) port(s) de données à envoyer par le/les premier(s) port(s).

9. Procédé selon les revendications 7 ou 8, dans lequel l'étape de réduction comprend la détermination, pour un ou plusieurs des types prédéterminés de données, d'une largeur de bande minimale avec laquelle les moyens de réduction sont adaptés pour envoyer le/les types(s) prédéterminé(s) de données entre le/les premier(s) port(s) et le/les deuxième(s) port(s) et pas de réduction de la largeur de bande avec laquelle les moyens de réduction envoient le/les types(s) prédéterminé(s) de données entre le/les premier(s) port(s) et le/les deuxième(s) port(s) si cette largeur de bande est inférieure à la largeur de bande minimale pour le/les types(s) prédéterminé(s) de données.

10. Procédé selon l'une quelconque des revendications 7 à 9, dans lequel l'étape de détermination comprend l'exécution de la détermination et de la comparaison avec des intervalles de temps réguliers.

11. Procédé selon l'une quelconque des revendications 7 à 10, dans lequel le pourcentage prédéterminé est de 99,99 % ou moins.

12. Procédé selon la revendication 7, dans lequel le/les deuxième(s) port(s) possède(nt) une largeur de bande de sortie totale maximale, la largeur de bande de sortie totale étant nettement supérieure à la largeur de bande de réception totale.
